Europäisches Patentamt

European Patent Office

Office européen des brevets

(11) Numéro de publication : **0 296 959 B1**

# FASCICULE DE BREVET EUROPEEN

(45) Date de publication du fascicule du brevet :
29.07.92 Bulletin 92/31

(21) Numéro de dépôt : **88401542.1**

(22) Date de dépôt : **21.06.88**

(51) Int. Cl.⁵ : **G05B 9/02,** F16H 57/00,
G05D 16/20

(54) **Dispositif de commande de sécurité d'un actuateur du type electrovanne battante à solénoide.**

(30) Priorité : **22.06.87 FR 8708744**

(43) Date de publication de la demande :
**28.12.88 Bulletin 88/52**

(45) Mention de la délivrance du brevet :
**29.07.92 Bulletin 92/31**

(84) Etats contractants désignés :
**BE DE ES GB IT NL SE**

(56) Documents cités :
**FR-A- 2 339 899**
**FR-A- 2 542 887**
**US-A- 3 628 118**

(56) Documents cités :
**PATENT ABSTRACTS OF JAPAN, vol. 7, no.
134 (P-203)[1279], 11 juin 1983, page 140 P 203;
& JP-A-58 51 311 (TOKYO SHIBAURADENKI
K.K.) 26-03-1983
PATENT ABSTRACTS OF JAPAN, vol. 8, no. 35
(M-276)[1472], 15 février 1984, page 33 M 276;
& JP-A-58 190 621 (MATSUSHITADENKI SAN-
GYO K.K.) 07-11-1983**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Pannier, Gérard
5, Allée de Launay
F-78640 Villiers-Saint-Frederic (FR)**

(74) Mandataire : **Ernst-Schonberg, Michel et al
REGIE NATIONALE DES USINES RENAULT (S.
0267) 8 & 10, avenue Emile Zola
F-92109 Boulogne Billancourt Cédex (FR)**

## Description

La présente invention se rapporte à un dispositif de commande de sécurité d'actuateurs du type électrovanne battante à solénoïde qui est utilisé notamment dans les boîtes de vitesses automatiques.

Par la publication US 3.628.118, on connaît un circuit électrique permettant de contrôler si le courant principal traversant un consommateur tel que le solénoïde d'équilibrage de force d'un dispositif de transmission de pression conserve une relation sensiblement linéaire avec le rapport de répartition spaciale d'un signal à largeur d'impulsion modulée variant selon un signal d'erreur développé sur une sortie du dispositif de transmission de pression. Ce circuit comprend notamment un intégrateur, un consommateur tel que le solénoïde mentionné, un résistor sensible au courant, monté en série avec le solénoïde, et un comparateur.

Par ailleurs, depuis plusieurs années, on voit apparaître des systèmes de pilotage électronique d'injection d'essence ou de gazole, de transmission automatique, d'organe de freinage, d'organe de direction, ou d'organe de suspension utilisant, parmi d'autres actuateurs électrohydrauliques, des électrovannes battantes à solénoïde de type injecteur de carburant ou de type modulateur de pression par exemple. Très généralement, ces actuateurs sont du type à solénoïde et présentent la particularité d'avoir un canal hydraulique qui a notamment pour caractéristique de pouvoir s'ouvrir et se fermer très rapidement un très grand nombre de fois sans dégradation fonctionnelle pendant la durée de vie du produit. C'est la force électromagnétique développée par le solénoïde dans le circuit magnétique de l'actuateur qui permet la fermeture ou l'ouverture du canal hydraulique par déplacement d'un équipage mobile qui peut être constitué par exemple soit directement par un noyau plongeur, une bille, un plateau, etc. qui se trouve dans le flux magnétique, soit indirectement par un tiroir hydraulique isolé magnétiquement de l'actuateur mais actionné par un noyau plongeur, une bille, un plateau, etc. qui se trouve dans le flux magnétique. Quand le solénoïde n'est pas alimenté, c'est la force exercée par la pression du fluide lui-même et/ou par l'action d'un ressort qui provoque inversement l'ouverture ou la fermeture du canal hydraulique.

Très généralement, afin de réduire au maximum la durée de déplacement de l'équipage mobile qui perturbe la réponse fonctionnelle de l'actuateur, la résistance du solénoïde est choisie la plus petite possible. Cet aménagement augmente la croissance ou la décroissance du courant dans le solénoïde dès l'apparition de l'ordre d'activation ou de désactivation pour faire croître ou pour faire décroître plus rapidement la force électromagnétique.

De manière à réduire l'énergie dissipée par l'actionneur quand l'ordre d'activation est maintenu après que l'équipage mobile soit en butée de course et lorsque le courant qui traverse le solénoïde atteint une valeur dite "appel", le courant est réduit et seulement maintenu par un dispositif électronique de limitation à une valeur dite "maintien".

Il est clair que toute anomalie électrique - court-circuit, circuit ouvert, résistance anormale - affectant le fonctionnement d'un tel actuateur peut avoir des conséquences très préjudiciables sur le bon fonctionnement de l'organe commandé, sur sa tenue mécanique et même sur la sécurité des occupants du véhicule. Pour faire face à ce problème, les dispositifs connus de surveillance et de coupure associés aux électrovannes battantes à solénoïde décrites ci-dessus sont inefficaces. Ces dispositifs sont, en effet, généralement conçus de telle manière que la surveillance du bon fonctionnement électrique de l'électrovanne est faite par mesure de l'intensité du courant traversant le solénoïde et/ou la tension présente soit directement à ses bornes, soit aux bornes de l'organe de commutation électrique de pilotage placé en série avec l'électrovanne et par analyse comparée et synchrone des valeurs mesurées par rapport à des gabarits connus représentant les différentes combinaisons possibles lors de bons ou de mauvais fonctionnements du dispositif. Dans le cas des électrovannes battantes, les valeurs de l'intensité du courant traversant le solénoïde et la tension à ses bornes ou aux bornes de l'organe de commutation sont essentiellement variables dans le temps, à cause notamment de l'action du système de limitation du courant et ne peuvent, par conséquent, pas être comparées simplement à des gabarits établis à l'avance, ce qui rend inefficace un tel mode de diagnostic d'une anomalie de fonctionnement. Le principe d'isolement de l'électrovanne vis-à-vis de ses liaisons électriques est, en général, mis en oeuvre par la coupure du circuit en aval de l'électrovanne par action directe sur l'organe de commutation lui-même ou, mieux encore, par coupure complémentaire du circuit en amont de l'électrovanne par action sur un dispositif passant/non-passant approprié, de manière à réaliser une isolation galvanique complète des 2 sorties de l'électrovanne dont on désire couper l'alimentation.

L'objet de la présente invention, qui est une commande de sécurité d'une électrovanne battante à solénoïde, consiste à mesurer la durée que met l'intensité du courant à croître par effet selfique dans le solénoïde qui vient d'être activé, entre l'instant du début de conduction et l'instant où le courant atteint une valeur prédéterminée.

Cette durée est significative du bon ou du mauvais fonctionnement électrique de l'électrovanne.

L'invention sera mieux comprise en se référant au schéma n° 1 qui représente un exemple de réalisation d'un tel dispositif où l'on reconnaît en 1 la ligne générale positive de la source d'alimentation du véhicule qui est reliée par l'intermédiaire du fusible 2 au conducteur 3 du circuit d'alimentation du calculateur électronique de pilotage 4 de l'électrovanne 5. La ligne générale négative de la source d'alimentation 6 est reliée au conducteur de masse 7 du même circuit d'alimentation du dispositif de pilotage 4. Le conducteur 3 d'alimentation positive est relié par l'intermédiaire de la diode 8 à la fois au dispositif de commande 9, au dispositif de contrôle de courant 10, à l'électrovanne 5 par le conducteur et enfin à la cathode de la diode 12 dont l'anode retourne par le fil 13 à l'autre borne de l'électrovanne 5 ainsi qu'à la sortie de puissance 14 du dispositif de contrôle de courant 10.

Le courant qui traverse l'électrovanne 5 et qui vient du conducteur positif 3 lorsque le dispositif de commande 9 donne l'ordre d'activation au dispositif de contrôle du courant 10 qui sont reliés entre eux par les bornes 15 et 16, le conducteur 17 passe en amont de l'électrovanne 5 par la diode 8 et le conducteur 11 et en aval passe par le conducteur 13 et entre par la borne de puissance 14 du dispositif de contrôle de courant 10 et ressort par la borne 18 puis entre à la borne 19 de la résistance shunt 20, la traverse et retourne par le conducteur 21 à la ligne d'alimentation de masse 7. La ligne 21 est également reliée à la borne 22 du dispositif de commande 9 et à la borne 23 du dispositif de contrôle de courant 10 afin de les connecter à la ligne d'alimentation de masse 7. La borne 19 du shunt est raccordée au dispositif de contrôle de courant 10 par la borne 24 et au dispositif de commande 9 par la borne 25. La liaison 26 à trois états logiques est raccordée au dispositif de commande 9 et fournit les signaux de diagnostic du calculateur 4.

Le rôle du fusible 2 est, entre autres, de protéger la liaison 11 qui achemine le courant du calculateur électronique 4 à l'électrovanne 5, situé en général à deux endroits différents dans le véhicule, et qui peut en cas d'anomalie de fonctionnement venir toucher la masse et provoquer un court-circuit de la source d'alimentation du véhicule.

Le rôle de la diode 8 est de protéger l'ensemble du calculateur 4 contre les inversions de polarité de la source d'alimentation du véhicule.

Le rôle de la diode 12 est d'assurer la protection du dispositif de limitation du courant 10 contre la surtension développée par effet selfique de l'électrovanne 5.

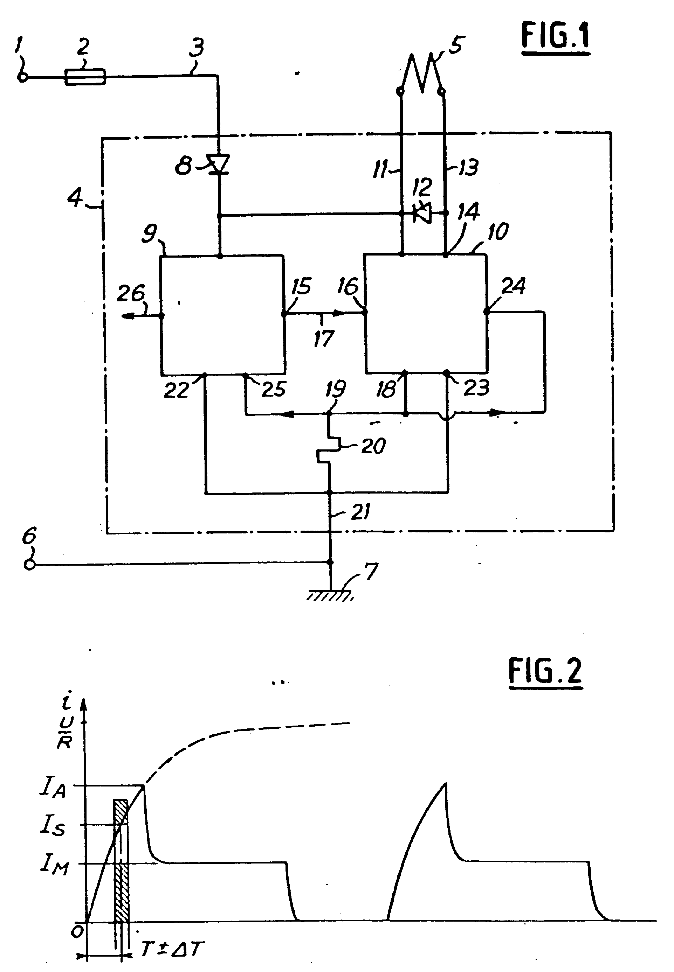

On comprendra mieux le fonctionnement de l'exemple de réalisation en se reportant à la figure 2 qui représente la forme d'onde du courant circulant dans l'électrovanne 5. On reconnaît notamment la montée libre du courant jusqu'à la valeur IA dite "intensité d'appel" qui devrait atteindre la valeur U/R (U étant la tension aux bornes de l'électrovanne 5 et R sa résistance) si la durée d'activation TA était très grande vis-à-vis de la constante de temps resisto-selfique de l'électrovanne. A partir de la valeur IA, le dispositif de limitation de courant 10 qui présentait une chute de tension très faible, entre en action et régule le courant à la valeur IM dite "intensité de maintien" tant que l'ordre d'activation, venant de la borne 15 du dispositif de commande 9, est maintenu à l'entrée 16 du dispositif de limitation du courant 10 (durée TA de la figure 2). Lorsque l'ordre de désactivation donné par le dispositif de command 9 apparaît, le dispositif de limitation 10 se coupe de façon à interrompre le courant dans l'électrovanne 5 (durée TD de la figure 2). Le cycle peut alors reprendre par succession de durées TA et TD.

Le principe de détection d'une anomalie de fonctionnement électrique de l'électrovanne 5 ou d'une anomalie de continuité des liaisons 11 et 13 est de surveiller l'instant où le courant qui croît dans l'électrovanne 5 pendant la phase d'activation TA du dispositif de limitation du courant 10 atteint une valeur IS dite "intensité de seuil" comprise évidemment entre 0 et la valeur d'appel IA. Pour ce faire, la tension présente au borne de la résistance shunt 20 parcourue par le courant traversant l'électrovanne 5 est envoyée entre les bornes 25 et 22 du dispositif de commande 9 afin d'être comparée à une tension comme représentative de l'intensité de seuil IS. Le dispositif de commande 9 est notamment conçu pour mesurer le temps qui s'écoule entre le début de la durée d'activation du courant dans l'électrovanne 5 et le moment où le courant de l'électrovanne 5, qui croît, atteint le seuil de valeur IS. Ce temps est envoyé à un comparateur de durée qui signale les écarts avec, ou la conformité à une durée comprise entre TS - $\Delta$T et TS + $\Delta$T correspondant à l'apparition de la valeur IS dans une situation correcte en tenant compte des tolérances ou dérives éventuelles de fonctionnement.

Une durée anormale commande par la liaison 17 l'ouverture du dispositif de limitation du courant 10 afin de couper le courant dans l'électrovanne 5 et place l'état logique de la liaison 26 de diagnostic parmi les trois états possibles dans un état approprié correspondant à la détection de l'anomalie de fonctionnement.

Une durée trop courte signale soit un court-circuit de l'électrovanne 5, soit une valeur de résistance anormalement faible, soit un court-circuit à la ligne positive d'alimentation de la liaison 13.

Une durée trop longue signale soit une coupure de l'électrovanne 5, soit une coupure de ses liaisons 11 ou 13, soit un court-circuit à la masse d'une ou des deux liaisons 11 et 13 juste avant que le fusible 2 fonde, soit une coupure entre les bornes 14 et 18 du dispositif de commande 9. Il faut remarquer que la rapidité de détection est d'autant plus grande que le cycle activation/désactivation de l'électrovanne 5 (TA + TD) est court.

Bien entendu, de nombreuses variantes à la réalisation décrite peuvent être envisagées sans pour autant sortir du domaine de l'invention. On peut citer par exemple soit la modification du branchement de l'électrovanne (par example liaison électrique directe à la ligne négative d'alimentation du véhicule), soit l'utilisation d'un tel principe pour contrôler n'importe quel dispositif selfique tel que capteur ou actionneur ayant la particularité, ou bien de fonctionner sous tension pulsée, ou bien d'avoir la possibilité sans gêner leur action d'être interrompu momentanément dans leur fonctionnement pour leur appliquer un échelon de tension afin de contrôler leur fonctionnement en utilisant le principe qui fait l'objet de la présente invention.

## Revendications

1. Dispositif de commande de sécurité d'un actuateur du type électrovanne (5) battante à solénoïde, notamment pour boîte de vitesses automatique, comportant un dispositif de contrôle de courant (10) caractérisé en ce qu'il comporte une résistance shunt (20) de mesure de courant dudit dispositif de contrôle de courant (10) et un boîtier de commande (9) qui mesure la durée entre l'instant 0 de départ d'alimentation de l'électrovanne (5) et l'instant où le courant atteint une intensité de seuil IS qui compare ladite durée à un temps TS ± Δ T qui caractérise le bon fonctionnement de l'électrovanne (5) de manière que, lorsque ce temps n'est pas respecté, le boîtier de commande (9) agisse sur le dispositif de contrôle de courant ( 10) par l'intermédiaire d'un conducteur (17) pour couper l'alimentation de ladite électrovanne (5).

2. Dispositif de commande selon la revendication 1 caractérisé en ce qu'un fusible (2) est disposé sur la ligne générale positive (1) de la source d'alimentation de manière à protéger l'électrovanne (5) et ses conducteurs (11) et (13) d'un court-circuit.

3. Dispositif de commande selon la revendication 1 caractérisé en ce que, lorsque la durée est différente du temps TS± Δ T; le boîtier de commande (9) place une liaison (26) de diagnostic d'un calculateur (4) parmi trois états possibles, dans un état approprié correspondant à la détection de l'anomalie de fonctionnement.

## Patentansprüche

1. Sicherheitssteuerungsvorrichtung für einen Betätiger vom Typ des Klappenrückschlagelektroventils (5) mit Solenoid, insbesondere für automatische Getriebe, mit einer Stromsteuereinrichtung (10), dadurch gekennzeichnet, daß sie einen Shunt-Widerstand zur Messung des Stroms der Stromsteuereinheit (10) aufweist und ein Steuergehäuse (9) zur Messung der Dauer zwischen dem Zeitpunkt 0 des Beginns der Versorgung des Elektroventils (5) und dem Zeitpunkt, zu dem der Strom eine Schwellwertintensität IS erreicht, welche diese Dauer mit einer Zeit TS ± Δ T vergleicht, wodurch die gute Wirkungsweise des Elektroventils (5) derart charakterisiert wird, daß, wenn diese Zeit nicht eingehalten wird, das Steuergehäuse (9) auf die Stromsteuereinheit (10) über einen Leiter (17) einwirkt, um die Stromzufuhr zum Elektroventil (5) zu unterbrechen.

2. Steuerungsvorrichtung nach Anspruch 1, dadurch gekennzeichnet, daß in der positiven Zufuhrleitung (1) für die Versorgungsquelle eine Dichtung (2) derart eingesetzt ist, daß das Elektroventil (5) und seine Leitungen (11 und 13) gegen einen Kurzschluß gesichert sind.

3. Steuerungsvorrichtung nach Anspruch 1, dadurch gekennzeichnet, daß, wenn die Dauer unterschiedlich von der Zeit TS ± Δ T ist, das Steuergehäuse (9) eine Diagnoseverbindung (26) eines Rechners (4) in eine von drei möglichen Stellungen schaltet, welche der Feststellung der Anomalie der Funktionsweise entspricht.

## Claims

1. A safety control device for an actuator of the swing electrovalve (5) type with a solenoid, in particular for an automatic gearbox, comprising a current monitoring device (10), characterized in that it comprises a shunt resistance (20) for measuring the current from the current monitoring device (10) and a control box (9) which measures the duration between the instant 0 of commencement of supply of the electrovalve (5) and the instant at which the current reaches a threshold intensity IS which compares this duration to a time TS ± ΔT which characterizes the correct operation of the electrovalve (5) so that, when this time is not respected, the control box (9) acts on the current monitoring device (10) via a conductor (17) in order to cut off the supply to the electrovalve (5).

2. A control device as claimed in claim 1, characterized in that a fuse (2) is disposed on the general positive line (1) of the supply source so as to protect the electrovalve (5) and its conductors (11) and (13) from short circuits.

3. A control device as claimed in claim 1, characterized in that when the duration is different from the time TS ± ΔT, the control box (9) disposes a diagnostic connection (26) of a calculator (4) in an appropriate state of three possible states corresponding to the detection of the operating abnormality.

FIG.1

FIG.2